(19) Europäisches Patentamt / European Patent Office / Office européen des brevets

(11) **EP 2 780 694 B1**

(12) **EUROPEAN PATENT SPECIFICATION**

(45) Date of publication and mention
of the grant of the patent:
**09.03.2016 Bulletin 2016/10**

(21) Application number: **12788175.3**

(22) Date of filing: **12.11.2012**

(51) Int Cl.:
$G01N\ 21/64$ [(2006.01)]  $G01N\ 15/10$ [(2006.01)]

(86) International application number:
**PCT/EP2012/072375**

(87) International publication number:
**WO 2013/072273 (23.05.2013 Gazette 2013/21)**

(54) **METHOD OF AND APPARATUS FOR TRACKING A PARTICLE, PARTICULARLY A SINGLE MOLECULE, IN A SAMPLE**

VERFAHREN UND VORRICHTUNG ZUR VERFOLGUNG EINER PARTIKEL, INSBESONDERE EINES EINZELNEN MOLEKÜLS, IN EINER PROBE

PROCÉDÉ ET APPAREIL DE SUIVI DE PARTICULE, EN PARTICULIER UNE MOLÉCULE UNIQUE, DANS UN ÉCHANTILLON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.11.2011 DE 102011055367**

(43) Date of publication of application:
**24.09.2014 Bulletin 2014/39**

(73) Proprietor: **Max-Planck-Gesellschaft zur
Förderung
der Wissenschaften e.V.
80539 München (DE)**

(72) Inventor: **HELL, Stefan W.
37085 Göttingen (DE)**

(74) Representative: **REHBERG HÜPPE + PARTNER
Patentanwälte PartG mbB
Robert-Gernhardt-Platz 1
37073 Göttingen (DE)**

(56) References cited:
**US-A- 3 999 855          US-A- 5 793 478
US-A1- 2003 007 894**

- HU ZHANG ET AL: "Optical tweezers for single cells", JOURNAL OF THE ROYAL SOCIETY INTERFACE, vol. 5, no. 24, 6 July 2008 (2008-07-06), pages 671-690, XP055030169, ISSN: 1742-5689, DOI: 10.1098/rsif.2008.0052
- DHOLAKIA ET AL: "Optical micromanipulation takes hold", MATERIALS TODAY, ELSEVIER SCIENCE, KIDLINGTON, GB, vol. 1, no. 1, 1 February 2006 (2006-02-01), pages 18-27, XP005262364, ISSN: 1369-7021, DOI: 10.1016/S1369-7021(06)71362-1

## Description

## TECHNICAL FIELD OF THE INVENTION

The invention relates to a method of tracking a movement of a particle in a sample, the particle being driven to emit photons when subjected to light, and the method comprising detecting the photons emitted by the particle. Further, the invention relates to an apparatus for performing such a method comprising a light source configured to provide the light and a detector configured to detect the photons.

The particle whose movement in the sample is tracked may be a single molecule, a group of molecules moving together, a complex, a quantum dot, a reflecting gold particle or the like.

The process underlying the emission of photons by the particle being subjected to the light may be fluorescence. However, many other processes may also be used as a basis for the emission of photons, e.g. scattering of the light.

The respective process causing the emission of photons may be related to the properties of the particle to be tracked itself or to a marker, particularly a dye, marking the particle to be tracked.

## PRIOR ART

According to a known method of tracking a movement of a single molecule in a sample, the molecule is excited by light for emitting photons, and the photons emitted by the molecule are detected with a two-dimensional detector imaging the sample. The current position of the molecule is then determined from the spatial distribution of the photons detected by the detector. With an appropriate pixel density of the detector, a present position of the molecule can be determined from the spatial distribution of the photons at a spatial resolution higher than the diffraction limit. However, it is an additional requirement for tracking the particle at a spatial resolution beyond the diffraction limit that a higher number of photons can be detected for each position of the molecule, i.e. before the molecule changes its position. This is due to the fact that the higher number of photons only enhances the spatial resolution achieved in determining the position of the molecule, if this position remains unchanged for the whole period over which the molecules emits the higher number of photons.

The spatial resolution is given by the radius $\Delta r$ of a circle around a position of the molecule determined from the centre of intensity of the diffraction pattern of the photons from the molecule imaged onto the detector. The true position of the molecule is located within that circle. The radius $\Delta r$ is given by

$$\Delta r = FWHM/N^{1/2} \qquad (1)$$

and depends on the number N of detected photons and on the full width at half maximum FWHM of the diffraction pattern.

As the known method of tracking a movement of a single molecule requires a huge number N of photons for each position of the molecule in the sample, the molecule is seriously stressed which results in an increased risk of bleaching the molecule. In the process of bleaching, the molecule being in an excited state chemically changes such that no photons are provided anymore by the molecule after bleaching. Beside the photochemical bleaching, it is also possible that a molecule which has been intensively and/or numerously excited to emit photons is transferred to a metastable dark state. From the metastable dark state the molecule may return after some time. In the meantime, however, the molecule cannot emit any photons required for continuously tracking the molecule.

Consequently, there are only some molecules, i.e. only some so-called fluorescent dyes or fluorophores, which are suited for use in the known method. Many fluorophores bleach too fast and hence their movement or the movement of a molecule marked with the fluorophore cannot be tracked for an extended period of time or a longer distance covered within the sample.

For the before mentioned method, the position of the molecule is determined from the distribution of the positions at which the photons emitted by the molecule are detected by a two-dimensional detector. This approach is called localization. Another approach than localization is given by so-called STED or RESOLFT fluorescence light microscopy. Here, the spatial region in which the molecules in a sample are effectively excited to emit photons is reduced to a size smaller than the diffraction limit. Thus, the photons emitted from the sample can be attributed to this particular spatial region of reduced size independent from the position where the photons are detected and independent from the number of photons detected. In practice, the reduction of the spatial region of effectively exciting the molecules to emit photons is achieved by applying a focused excitation light beam which is superimposed with an interference pattern of coherent beams of fluorescence inhibiting light. This interference pattern comprises a zero point at the focal point of the excitation light beam. For high absolute intensities of the beams of fluorescence inhibiting light, the intensity of the fluorescence inhibiting light exceeds a saturation intensity $I_S$ anywhere but at the zero point such that the emission of photons by the molecules in the sample is inhibited essentially anywhere but at the zero point. The achieved spatial resolution is given by

$$\Delta r = \lambda/(n \sin \alpha \, (1 + I/I_S)^{1/2}) \qquad (2),$$

wherein I is the maximal intensity of the interference pattern in the sample.

In STED fluorescence light microscopy the inhibition of fluorescence is achieved by stimulated emission. In case of RESOLFT fluorescence microscopy the inhibition of fluorescence is achieved by a temporarily transferring the molecules into a confirmation state in which the molecules are not capable to fluoresce. Since in STED fluorescence light microscopy high absolute intensities of the fluorescence inhibiting light are required, the risk of bleaching the fluorophores used is relatively high. For RESOLFT fluorescence light microscopy, relatively low intensities of the fluorescence inhibiting light are already sufficient. However, this approach can only be applied with special fluorophores that can be switched into a conformation state in which the fluorophore is not capable to fluoresce.

In general, approaches like a STED or RESOLFT fluorescence light microscopy would be suited for tracking a movement of a particle in a sample, in that the particle is tracked with the region of spatially reduced size where the particle is effectively excited to emit fluorescence light. Detecting whether the particle is still located in the region of spatially reduced size where the particle can effectively be excited to emit fluorescence and thus determining the position of the particle would only possible in that the rate of photons emitted by the tracked particle would be continuously maximized. Although less photons would be required for the tracking according to this approach than for the continuous localization of the particle, the number of particles and markers which are suited for tracking a movement over longer distances could not be significantly increased. Besides, in STED and RESOLFT fluorescence light microscopy, different light beams have to be applied for providing the excitation light and the light for inhibiting fluorescence. This requires additional effort since the different light beams have different wavelengths and since the different light beams have to be carefully aligned spatially.

From DE 25 46 952 A1 belonging to the same patent family as US 3,999,855 A an optical system basing on the so-called attenuated total reflectance is known which is applied to track movements of particles in a sample. According to DE 25 46 952 A1 the sample is subjected to light driving the particles to emit photons. Since the intensity distribution of the light illuminating the sample is not homogeneous but spatially modulated, a movement of the particle results in a respective fluctuation of the number of emitted photons. Thus, considering the modulation of the intensity distribution the movement of the particle can be concluded from the detected fluctuation of photons emitted, i.e. the modulation of a detector signal. However, a movement of a particle moving along a path of constant light intensity cannot be tracked. Particularly, a particle never or only rarely subjected to the light cannot be tracked. Instead, for tracking the movements of particles in a sample with the optical system known from DE 25 46 952 A1 it is essential that the particles are frequently subjected to the light. Hence, the risk of bleaching the particles or markers marking the particles is not effectively diminished but has to be accepted.

US 2003/0007894 A1 discloses a method and an apparatus using optical forces for sorting of particles, particularly Fluorescent Activated Cell Sorting (FACS).

US 5,793,478 A discloses an apparatus for measuring particle properties from detected light scattered by the particles. The apparatus uses a light beam with an intensity profile along a particle path. The beam has edges where the intensity drops to a minimum. Between the beam edges, the beam intensity rises to a higher value at two other points along the particle path. The valley between the two peaks has a non-zero intensity that is less than the intensity at the two peaks. This light beam is used to discriminate between particles that pass through the beam and those that pass through an edge of the beam. The apparatus also discriminates between the light scattered by one particle and light scattered by multiple particles. The particle's size can be determined from the intensity of the light scattered. The particle's velocity can be determined from the elapsed time between various intensities of the light scattered.

There still is a need for a method of and an apparatus for tracking a movement of a particle in a sample in which the risk of bleaching the particle or the marker marking the particle remains small even if the movement of the particle is tracked for a longer period of time or over a longer distance covered by the particle in the sample.

## SUMMARY OF THE INVENTION

The present invention relates to a method of tracking a movement of a particle in a sample, the particle being driven to emit photons when subjected to light. The method comprises forming the light to provide a light intensity distribution comprising a spatially limited minimum. The light intensity distribution is applied to the sample such that the particle is located in the spatially limited minimum of the light intensity distribution. The photons emitted by the particle are detected, and the light intensity distribution is moved relative to the sample such that a rate of the photons emitted by the particle remains minimal. In this way, the particle is tracked by the minimum of the intensity distribution of the light intensity distribution.

Further, the present invention relates to an apparatus for tracking a movement of a particle in a sample. The apparatus comprises a light source configured to provide light for driving the particle to emit photons, the light source including beam shaping means configured to apply the light to the sample with an intensity distribution comprising a spatially limited minimum, a detector configured to detect the photons emitted by the particle and to provide a signal indicating a rate of the photons detected, and beam deflecting means configured to move the intensity distribution relative to the sample and to be controlled based on the signal of the detector such that a rate of the photons detected by the detector remains minimal for tracking the moving particle with the minimum.

Advantageous further developments of the invention result from the claims, the description and the drawings.

## BRIEF DESCRIPTION OF THE DRAWINGS

In the following, the invention is further explained and described with reference to preferred exemplary embodiments illustrated in the drawings.

Fig. 1    illustrates an exemplary embodiment of an apparatus according to the present invention for performing an embodiment of a method according to the present invention.

Fig. 2    shows another exemplary embodiment of the apparatus according to the present invention for performing another embodiment of the method according to the present invention.

Fig. 3    shows a particle in a region of a minimum of an intensity distribution for driving the particle to emit photons.

Fig. 4    shows the intensity of the intensity distribution according to Fig. 3 depending on the position along a line profile; further, the resulting rate of photons emitted by the particle according to Fig. 3 is shown.

Fig. 5    shows the situation after a movement of the particle out of its position according to Fig. 3; and

Fig. 6    shows the situation after the intensity distribution has followed the movement of the particle.

## DETAILED DESCRIPTION

According to the method according to the present invention, the light intensity distribution applied to the sample comprises a spatially limited minimum. Like in case of the fluorescence inhibiting light used in STED or RESOLFT fluorescence light microscopy, this intensity distribution is preferably formed by an interference pattern of coherent light beams, in which the spatially limited minimum is a zero point of the interference pattern. Thus, the minimum can be provided with small spatial dimensions. In particular, the spatial dimensions of the minimum may be smaller than the diffraction limit. In contrast to STED and RESOLFT fluorescence light microscopy, the light displaying this particular intensity distribution is not used for inhibiting fluorescence but for driving the particle which is tracked in the sample for emission of photons in the method according to the present invention. Further, the sample is not scanned with the minimum of the intensity distribution, but the intensity distribution is continuously only moved relative to the sample such that a rate of the photons emitted by the particle and subsequently detected is minimized. A minimal rate of the photons corresponds to the fact that the particle is still located at the position of the minimum of the light intensity distribution. With a steep increase of the intensity of the light outside of the minimum and by means of fast tracking the intensity distribution with regard to the current position of the particle in the sample making use of this steep increase, the movement of the particle can be tracked at a spatial resolution which is significantly below the diffraction limit. In the method according to the present invention, it is not required that the particle emits many photons. Consequently, the risk of bleaching the particle is strongly reduced. Hence, even particles which are prone to bleaching can be tracked for longer periods of time or over longer distances covered by the particle in the sample. Further, in contrast to methods based on STED or RESOLFT fluorescence light microscopy, the sample is only subjected to the intensity distribution comprising the minimum in the method according to the present invention. Thus, the light has to be aligned neither spatially nor with regard to its wavelength to another beam of light. Because of this, an optical setup for applying the method according to the present invention is a significantly less complex than that of a STED or RESOLFT fluorescence light microscope. In comparison to STED and RESOLFT fluorescence light microscopy there is also another difference: According to the method according to the present invention a small absolute intensity of the light intensity distribution with the minimum is already sufficient, provided that the light intensity distribution causes the emission of photons already at low intensities outside its minimum. Especially, it is not required that a saturation of the excitation for emission outside the zero point is achieved in order to achieve a spatial resolution below the diffraction limit. Instead, in many cases it is preferred that the excitation recognizably increases with increasing distance from the zero point. Last but not least, it is a characterizing feature of the invention that the number of photons emitted by the tracked particle is minimized and thus the risk of its bleaching is also minimized.

Moving or deflecting the intensity distribution relative, i.e. with regard to the sample for continuously minimizing the rate of the photons detected by a detector may be based on a trial and error approach. I.e. the intensity distribution is moved on a trial basis in small steps. If the movement causes a decrease of the rate of the detected photons resembling the rate of the emitted photons, the intensity distribution is further moved in the same direction. In the opposite case, if the movement causes an increase of the rate of the detected photons, the intensity distribution is moved into another direction, e.g. the opposite direction. Various suitable algorithms and embodiments, like those indicated by the keywords "tracking-algorithm" and "fuzzy-logic", are available to those skilled in the art.

From STED or RESOLFT fluorescence light microscopy various techniques are known for forming a light intensity distribution of fluorescence inhibiting light comprising a minimum. Any of these techniques may also be used in the method according to the present invention. To give only some examples, phase filters, spatial light modulators, 4 pi arrangements and the like may employed for forming the light intensity distribution comprising the minimum.

For moving or deflecting the light intensity distribution with the minimum relative to the sample, a scanner may be applied like it is known from STED and RESOLFT fluorescence light microscopy. For example, such a scanner comprises acousto-optic or electro-optic reflectors, rotating mirrors, piezo-electric actuators by which the sample is adjusted relative to the light beams or piezo-electric actuators which actuate an objective lens and by which the light beams are adjusted relative to the sample.

It is to be noted that moving the light intensity distribution with the minimum relative to the sample may alternatively or additionally to deflecting the light intensity distribution also be accomplished by shifting the sample with regard to the light intensity distribution with the minimum. Moving the light intensity distribution with the minimum relative to the sample only requires a relative movement between the light intensity distribution with the minimum relative and the sample. Particularly, moving the light intensity distribution with the minimum relative to the sample in x- and y-directions may be achieved by deflecting the light intensity distribution, and moving the light intensity distribution with the minimum relative to the sample in z-direction may be achieved by shifting the sample. The z-direction may be the direction orthogonal to the plane of main extension of the surface of the sample via which the light intensity distribution is applied to the sample, and the x- and y-directions may extend along or in parallel to this plane of main extension.

According to the method of the present invention, the minimum of the light intensity distribution may be spatially limited in one, two or three dimensions, i.e. the minimum may extend along a plane, along a line or around a point. For tracking the movement of the particle, the intensity distribution is then moved or deflected relative to the sample in all directions of that dimensions in which the minimum is limited. A movement in a direction in which the minimum is not limited will not cause a reduction of the rate of photons emitted by the particle and may thus not be used effectively. This also means that a movement of the particle in this direction cannot be tracked. Consequently, this direction is preferably oriented such that a movement of the particle in this direction is not expected. In many cases movements of particles in a sample are anyway confined to a direction along a particular structure. In case of a two-dimensional sample, the movement of the particle in the direction of the third dimension is omitted as a matter of principle.

It is also possible to modulate a phase relation of the light beams providing the intensity distribution by interference in order to one- or two-dimensionally limit the minimum in different directions. For example, the phase relation may be varied between a first and a second phase relation such that the minimum is limited by a ring in a x-y-plane in case of the first phase relation, and that the minimum is limited in z-direction in case of the second phase relation. Alternatively, different, successive phase relations may result in line- or plane-like minima which are oriented in different directions. These minima may be described as rotating stripes and comprise a point or a line as their spatial intersection. If one switches fast between such phase relations and if the minimum of the rate of the photons emitted by the particle is located either individually for each phase relation or over the whole variation of the phase relations, the movement of the particle in the sample may be tracked in all three dimensions.

According to the method of the present invention, the photons emitted by the particle need not to be detected by a two-dimensional detector array. Instead it is sufficient to use a point detector for detecting the photons since the tracking primary depends on the rate of these photons. The current position of the particle in the sample may be determined from the current position of the intensity distribution with the minimum relative to the sample. This position may be concluded from the positions of those devices by which the intensity distribution is moved relative to the sample, e.g. by the current position of the scanner used for moving the intensity distribution. The position of the intensity distribution relative to the sample may also be directly determined, for example by detecting the photons emitted by the particle with a camera imaging the sample and by evaluating an image of the light intensity distribution consisting of these photons on the camera. According to the principles of localization, this determination also allows for achieving a resolution beyond the diffraction limit.

Further, a camera imaging the sample may be used to determine an initial position of the particle by illuminating the sample with light driving the particles to emit photons without spatially structuring the light. In case that two or more particles are determined which emit photons and cannot be tracked separately from each other, it is possible to photochemically bleach the surplus particles by purposefully applying high intensities of the light as present in maxima of the light intensity distribution adjacent to its minimum. Such a bleaching of perturbing particles may also be applied when it is recognized, e.g. via the camera, that it is not the tracked particle which has moved but another particle of similar kind that has passed the path of the tracked particle. This may, for example, be concluded from a huge number of emitted photons further apart from the minimum of the intensity distribution of the light.

A camera imaging the sample may also be used to determine a direction of the movement of the particle from the positions where the photons emitted by the particles are detected with the camera. For this determination it is also possible that a localization of the particles is performed, wherein the localization is based on the photons emitted by the particle when leaving the minimum of the intensity distribution of the light. Here, it is not required that the localization is performed with high precision. Thus, it is not required that the particle emits many photons since the emitted photons are only used for determining a direction in which the minimum of the intensity distribution of the light has to be moved to follow the particle. However, the emitted photons are not needed for achieving the desired spatial resolution in tracking the particle. Instead, the spatial resolution is achieved by the subsequent minimizing of the rate of the photons emitted by the particle and thus by the form and/or the arrangement of the minimum of the light intensity distribution.

Since the method according to the present invention aims at a minimization of the rate of the photons emitted by the particle, the background which is detected in addition to the photons gains importance. The background may for example be given by the light which is applied to the sample in order to drive the particles to emit photons or due to autofluorescence of the particles. In order to minimize the influence of the background the light driving the particles to emit photons may be applied to the sample in pulses and the photons emitted by the particles may be detected in a limited time interval after each of the pulses of the light. This time interval or gate can be adjusted such that a maximal signal-to-noise ratio is achieved.

The method according to the present invention may also be applied to track a switchable particle, for example a switchable molecule, wherein the light for driving the emission of photons may cause an activation of the switchable molecule from a state from which the particle cannot be driven to emit photons into a fluorescence state from which the particle can be driven to emit photons. One example for such a switchable molecule is called PADRON which is a mutant of Green Fluorescent Protein (GFP). Although not required, it may be preferred in this embodiment if the particle quickly returns into the non fluorescent dark state, since this supports the effect of minimizing the rate of the emitted photons achieved in the minimum of the intensity distribution of the light driving the emission of photons. The return of the particle into the dark state may occur spontaneously or may be induced by any physical or chemical signal. Since is not required that this inducing signal is spatially structured, it is preferably not spatially structured. Light of another wavelength than that of the light driving the emission of photons may, for example, also be used for adjusting a small concentration of the activated particles which can be driven to emit photons in the sample as it is required for any tracking of single particles. For this purpose, the molecule called DRONPA may be used. DRONPA is another mutant of GFP and exhibits activation characteristics at its excitation wavelength which are contrary as compared to those of PADRON.

It is also possible to track movements of two or more different particles according to the method of the present invention. For this purpose, light of two or more different wavelengths may be used, and photons of wavelengths being characteristic for the respective particles may be detected. Apart from a common objective lens, this tracking of two or more different particles may be performed with separate devices. However, these devices may also share common parts except of the respective light sources. All common parts may then be used in an alternating manner for both particles, i.e. it is switched between the tracking of the one particle and the tracking of the other particle.

An apparatus according to the present invention comprises a light source providing the light which is used for driving the particle to emit photons, and a detector for detecting the photons emitted by the particle. The apparatus further comprises beam shaping means in the light source in order to apply the light to the sample with an intensity distribution including a spatially limited minimum. Further, beam deflecting means are provided which are controlled in dependence on a signal of the detector. This dependency is configured to keep a rate of the photons detected by the detector minimal by moving or deflecting the light intensity distribution relative to the sample. Thus, the moving particle is tracked with the minimum of the light intensity distribution.

The light source of the apparatus according to the present invention may superimpose coherent light beams interfering in an interference pattern displaying a zero point at the position of the minimum. For modulating a phase relation of the light beams the light source may comprise a dynamically controllable spatial light modulator.

A camera may be provided for imaging the sample. The camera may, for example, be used to determine where a particle to be tracked is located in the sample. For this determination, the sample may be subjected to the light without spatial structure. The camera may also be used to determine the position of the light intensity distribution when the particle is tracked in the sample. Moreover, the camera may be used to determine the direction in which the intensity distribution has to be moved for tracking the particle.

For tracking of two different particles two light sources providing light of different wavelengths may be provided. For a simultaneous tracking, separate beam shaping means and beam deflecting means may be provided for each of the light sources. However, it is also possible that common means are provided for both light sources which are used in an alternating manner. It is also possible that more than two light sources are provided for a simultaneous or fast alternating tracking of more than two particles.

Particularly, the light source may be a pulsed light source like a pulsed laser such that the light is applied to the sample in pulses. The detector may then provided with a gate and synchronized with the pulsed light source such that the photons emitted by the particle are detected after each pulse of the light in a limited time interval at a maximum signal-to-noise ratio.

Since an apparatus according to the present invention only needs to provide light for driving the particle for emission, its setup may be kept simple. However, the apparatus according to the present invention may also be realized on the basis of an (already present) STED or RESOLFT fluorescence light microscope. Here, the beam shaping means used for the light beams for inhibiting fluorescence may be used for the light by which the particle is driven to emit photons according to the present invention. Further, the beam deflecting means used for scanning the sample may be adapted to be used for a tracking of the particle by minimizing the rate of detected photons.

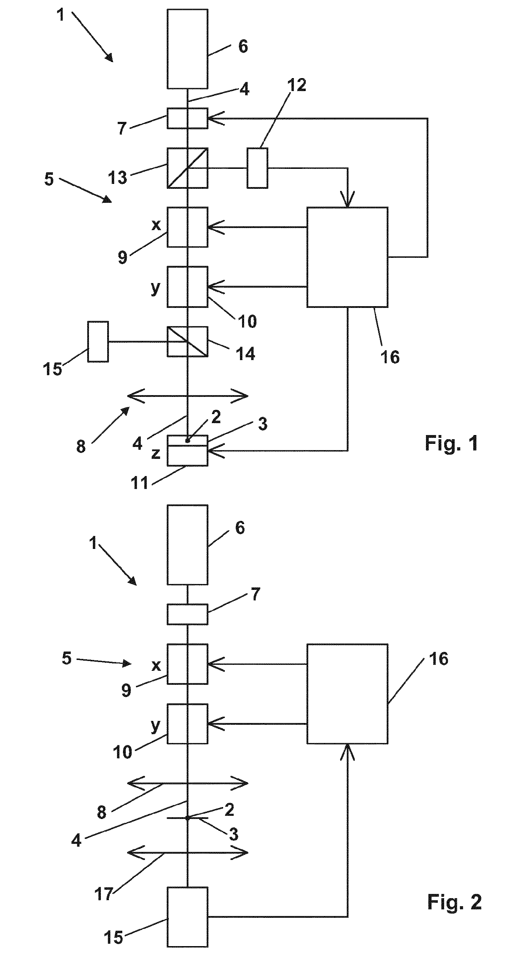

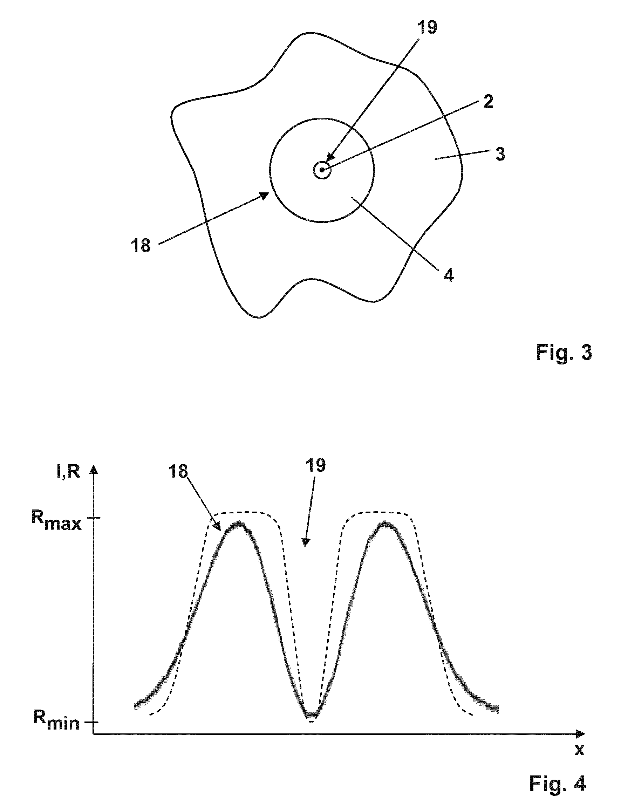

Referring now in greater detail to the drawings, Fig. 1 shows an apparatus 1 for tracking the movement of a particle 2 in a sample 3. The particle 2 may, for example, be a fluorescent marker, or the particle 2 may be marked with such a fluorescent marker. By light 4 from a light source 5 the fluorescent marker is driven to emit photons. This essentially only occurs outside of a minimum of an intensity distribution of the light 4 in the sample 3. This intensity distribution is described in more detail with reference to Fig. 3 to 6. The light source 5 comprises a laser 6, beam shaping means 7 for adjusting the desired light intensity distribution in the focal volume of an objective lens 8, and beam deflecting means 9, 10 and 11 for adjusting the position of the minimum of the intensity distribution of the light 4 in the sample 3. The beam deflecting means 9 and 10 directly work on the light 4 and move or deflect the minimum in x- and/or y-direction, i.e. in lateral direction with regard to the light path. The beam deflecting means 11, however, directly work on the sample 3 and move or deflect the minimum of the intensity distribution of the light 4 relative to the sample 3 in z-direction. Behind a dichroic beam splitter 13, a point detector 12 is provided for selectively detecting photons emitted by the particle 2. The beam splitter 13 is located in the optical path between the laser 6 and the sample 3, and in particular between the laser 6 and the beam deflecting means 9 and 10. Another beam splitter 14 is located between the beam deflecting means 9 and 10 and the objective lens 8. Via the beam splitter 14 a camera 15 including a two-dimensional detector monitors the sample 3. For initially locating the particle 2, the light 4 is applied to the sample 3 over a large area and the particle 2 is located on the basis of the photons emitted by the particle 2 and imaged with the camera 15. Then, the intensity distribution of the light 4 is adjusted relative to the particle 2 such that the particle 2 is located at the position of the minimum of the intensity distribution of the light 4. That the particle 2 is indeed located at the position of the minimum is checked by moving the intensity distribution of the light 4 relative to the sample 3 on a trial basis. Upon these movements the rate of the photons emitted by the particle 2 which are detected by the point detector 12 should increase. However, a decrease of the rate indicates that the intensity distribution of the light 4 has to be adjusted to track the particle 2 with the minimum because the particle 2 has moved. An increase of the rate of the photons without movement of the intensity distribution of the light 4 also means that the particle 2 has moved in the sample 3. Then, the intensity distribution of the light 4 has to be moved in order to track the particle 2 with the minimum until the rate of the photons has reached its minimum again. For this tracking, the beam deflection means 9 to 11 are controlled by a controller 16 in dependence on the signal of the detector 12. The position and/or movement of the minimum of the intensity distribution of the light 4 which is determined during the tracking resembles the movement of the particle 2 in the sample 3. A direction of the movement of the particle 2 may be determined from those positions where the photons emitted by the particle 2 are detected by the camera 15, i.e. where the particle gets out of the minimum, to support the tracking of the particle with the minimum.

In Fig. 1 it is indicated that the controller 16 also controls the beam shaping means 7. In practice, the beam shaping means 7 may be a spatial light modulator by which different intensity distributions of the light 4 in the sample 3 may be appropriately adjusted. The minima of these light intensity distributions are each limited in one or two dimensions and only comprise a common point of intersection with which the particle 2 can be tracked in the sample 3. This embodiment enables to track the particle 2 with regard to its movement in the sample 3 with maximal spatial resolution in all three dimensions.

The embodiment of the apparatus 1 illustrated in Fig. 2 does not comprise the point detector 12 according to Fig. 1. Here only the camera 15 is provided for detecting the photons emitted by the particle 2 in the sample 3. Further, the sample 3 is a sample essentially extending in two-dimensions only. The intensity distribution of the light 4 comprises a central minimum surrounded by a ring-like maximum with which the particle 2 is tracked. This doughnut-shaped intensity distribution of the light 4 is generated with the help of static beam shaping means 7. In the plane of the two-dimensional sample 3 the minimum of the intensity distribution of the light 4 is located with the beam deflecting means 9 and 10 which directly work on the light 4. The camera 15 is arranged behind a further objective lens 17 which is arranged on the side of the sample 3 opposite the objective lens 8. Here, the camera 15 is additionally used to determine the position of the intensity distribution of the light 4 in the sample 3. This allows to determine the current position of the beam deflecting means 9 and 10 on the one hand. On the other hand, this can be used to determine the position of the minimum of the intensity distribution of the light 4 in the sample. In particular, the position of the minimum in the sample may thus also be determined at a spatial resolution beyond the diffraction limit.

**Fig. 3** schematically shows the intensity distribution of the light 4 in the sample 3, the particle 2 being located at the central minimum 19 of the light intensity distribution 18. Fig. 4 is a graph showing the intensity I of the light intensity distribution 18 (straight line) along a line profile through the sample 3 according to Fig. 3 (at an increased scale). In the region of the minimum 19, the light intensity distribution 18 has an essentially sinusoidal curvature which is symmetric with regard to the minimum 19. In addition to the light intensity distribution 18, Fig. 3 shows the resulting rate R of the photons emitted by the particle 2 (dashed line) assuming that the particle 2 is subjected to the corresponding intensities I of the light 4. At the position of the minimum 19, the rate R also has its minimum value $R_{min}$. As soon as the particle 2 leaves this minimum 19, the rate R quickly increases. In particular, even at a small distance to the minimum 19 the rate R already reaches a value close to or equal to its maximum value $R_{max}$. This behaviour is advantageously used for tracking the particle 2 in the sample 3 with a minimum 19 of the light intensity distribution 18 at a high spatial resolution.

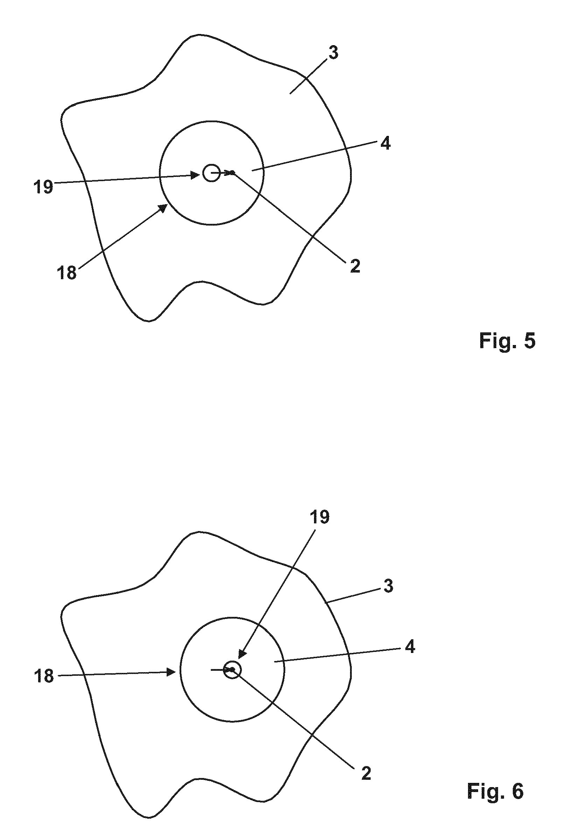

When the particle 2 has changed its position relative to the intensity distribution 18 and has left the minimum 19 as illustrated in **Fig. 5**, an increased rate R of photons emitted by the particle 2 is detected. By moving the intensity distribution 18 in the sample 3 on a trial basis, the rate is reduced again and kept minimal. In this way, it is determined in which direction and by which distance the particle 2 has moved, since the minimum of the rate is not achieved before the light intensity distribution 18 with the minimum 19 has been moved in the same direction and by the same distance relative to the sample 3 as illustrated in **Fig. 6**. The direction in which the intensity distribution 18 with the minimum 19 has to be moved to track the particle 2 may also be determined from the positions at which photons emitted by the particle 2 are detected with a camera.

## LIST OF REFERENCE NUMERALS

1    apparatus
2    particle
3    sample
4    light
5    light source
6    laser
7    beam shaping means
8    objective lens
9    beam deflecting means
10   beam deflecting means
11   beam deflecting means
12   point detector
13   beam splitter
14   beam splitter
15   camera
16   controller
17   objective lens
18   intensity distribution
19   minimum

I    intensity
R    rate

## Claims

1. A method of tracking a movement of a particle (2) in a sample (3), the particle (2) being driven to emit photons when subjected to light (4), the method comprising:

   - forming the light to provide a light intensity distribution (18) comprising a spatially limited minimum (19),
   - applying the light intensity distribution (18) to the sample (3) such that the particle (2) is located in the spatially limited minimum (19) of the light intensity distribution (18), and
   - detecting the photons emitted by the particle (2),
   **characterized by**
   - moving the light intensity distribution (18) relative to the sample (3) such that a rate of the photons emitted by the particle (2) remains minimal, wherein the particle (2) is tracked by the minimum (19) of the light intensity distribution (18).

2. The method of claim 1, wherein the minimum (19) of the light intensity distribution (18) is spatially limited in at least one spatial dimension, and wherein the light intensity distribution (18) is moved relative to the sample (3) in directions of all dimensions in which the minimum (19) is spatially limited.

3. The method of claim 1 or 2, wherein the light is formed to provide the light intensity distribution (18) by an interference pattern of coherent light beams of the light and wherein the minimum (19) is a zero point of the interference pattern, wherein, optionally, a phase relation of the coherent light beams is modulated to spatially limit the minimum (19) from different directions.

4. The method of any of the claims 1 to 3, wherein the photons are detected by a point detector (12).

5. The method of any of the claims 1 to 4, wherein the sample (3) is imaged with a camera (15), wherein, optionally, a starting position of the particle (2) is determined with the camera (15) when the sample (3) is uniformly subjected to the light.

6. The method of claim 5, wherein a position of the light intensity distribution (18) relative to the sample (3) is tracked by the camera (15), and/or wherein a direction of the movement of the particle (2) is determined by positions at which the photons emitted by the particle (2) are detected with the camera (15).

7. The method of any of the claims 1 to 6, wherein the light (4) is applied to the sample in pulses and wherein the photons emitted by the particle (2) are detected in a limited time interval after each of the pulses.

8. The method of any of the claims 1 to 7, wherein the particle is activated by the light (4) from a first state in which the particle can not be driven to emit photons into a second state in which the particle can be driven to emit photons.

9. The method of any of the claims 1 to 8, wherein movements of two different particles (2) are simultaneously or alternately tracked with light (4) of two different wavelengths.

10. An apparatus (1) for tracking a movement of a particle (2) in a sample (3), the apparatus (1) comprising:

- a light source (5) configured to provide light for driving the particle (2) to emit photons, the light source (5) including beam shaping means (7) configured to apply the light (4) to the sample (3) with an intensity distribution (18) comprising a spatially limited minimum (19), and
- a detector (12, 15) configured to detect the photons emitted by the particle (2) and to provide a signal indicating a rate of the photons detected, **characterized by**
- beam deflecting means (9 to 11) configured to move the intensity distribution (18) relative to the sample (3) and to be controlled based on the signal of the detector (12, 15) such that a rate of the photons detected by the detector (12, 15) remains minimal for tracking the moving particle (2) with the minimum (19).

11. The apparatus (1) of claim 10, wherein the light source (5) superimposes a plurality of coherent light beams to form an interference pattern comprising a zero point at the position of the minimum (19), wherein, optionally, the light source (5) includes a controllable spatial light modulator for modulating a phase relation of the plurality of light beams.

12. The apparatus (1) of any of the claims 10 and 11, wherein the detector is a point detector (12), or wherein the detector (12) is a camera (15).

13. The apparatus (1) of any of the claims 10 to 12, and further comprising a camera (15) configured to image the sample (3).

14. The apparatus (1) of any of the claims 10 to 13, wherein the light source (5) is a pulsed light source which applies the light (4) to the sample in pulses and wherein the detector (12) comprises a gate synchronized with the pulsed light source configured to detect the photons emitted by the particle in a limited time interval after each of the pulses.

15. The apparatus (1) of one of the claims 10 to 14, wherein two light sources are provided for light of different wavelengths for simultaneously or alternately tracking movements of two different particles.

**Patentansprüche**

1. Ein Verfahren zum Verfolgen einer Bewegung eines Partikels (2) in einer Probe (3), wobei der Partikel (2) dazu getrieben wird, Photonen zu emittieren, wenn er mit Licht (4) beaufschlagt wird, wobei das Verfahren aufweist:

- Formen des Lichts, um eine Lichtintensitätsverteilung (18) bereitzustellen, die ein räumlich begrenztes Minimum (19) aufweist,
- Aufbringen der Lichtintensitätsverteilung (18) auf die Probe (3), so dass der Partikel (2) in dem räumlich begrenzten Minimum (19) der Lichtintensitätsverteilung (18) angeordnet ist, und
- Detektieren der von dem Partikel (2) emittierten Photonen,
**gekennzeichnet durch**
- Bewegen der Lichtintensitätsverteilung (18) relativ zu der Probe (3) so dass eine Rate der Photonen, die von dem Partikel (2) emittiert werden, minimal bleibt, wobei der Partikel (2) mit dem Minimum (19) der Intensitätsverteilung (18) verfolgt wird.

2. Das Verfahren nach Anspruch 1, wobei das Minimum (19) der Lichtintensitätsverteilung (18) in mindestens einer räumlichen Dimension räumlich begrenzt ist, und wobei die Lichtintensitätsverteilung (18) relativ zu der Probe in Richtungen aller Dimensionen bewegt wird, in denen das Minimum räumlich begrenzt ist.

3. Das Verfahren nach Anspruch 1 oder 2, wobei das Licht geformt wird, um die Lichtintensitätsverteilung (18) durch ein Interferenzmuster von kohärenten Lichtstrahlen des Lichts bereitzustellen, und wobei das Minimum (19) eine Nullstelle des Interferenzmusters ist, wobei optional eine Phasenbeziehung der kohärenten Lichtstrahlen moduliert wird, um das Minimum (19) aus unterschiedlichen Richtungen räumlich zu begrenzen.

4. Das Verfahren nach einem der Ansprüche 1 bis 3, wobei die Photonen mit einem Punktdetektor (12) detektiert werden.

**5.** Das Verfahren nach einem der Ansprüche 1 bis 4, wobei die Probe (3) mit einer Kamera (15) abgebildet wird, wobei optional eine Startposition des Partikels (2) mit der Kamera (15) bestimmt wird, wenn die Probe (3) gleichmäßig mit Licht beaufschlagt wird.

**6.** Das Verfahren nach Anspruch 5, wobei eine Position der Lichtintensitätsverteilung (18) relativ zu der Probe (3) mit der Kamera (15) verfolgt wird und/oder wobei eine Richtung der Bewegung des Partikels (2) anhand von Positionen bestimmt wird, an denen die von dem Partikel (2) emittierten Photonen mit der Kamera (15) detektiert werden.

**7.** Das Verfahren nach einem der Ansprüche 1 bis 6, wobei das Licht (4) in Pulsen auf die Probe aufgebracht wird und wobei die von dem Partikel (2) emittierten Photonen in einem begrenzten Zeitraum nach jedem Puls detektiert werden.

**8.** Das Verfahren nach einem der Ansprüche 1 bis 7, wobei der Partikel durch das Licht (4) aus einem ersten Zustand, in dem der Partikel nicht dazu gebracht werden kann, Photonen zu emittieren, in einen zweiten Zustand aktiviert, in dem der Partikel dazu gebracht werden kann, Photonen zu emittieren.

**9.** Das Verfahren nach einem der Ansprüche 1 bis 8, wobei Bewegungen von zwei unterschiedlichen Partikeln (2) gleichzeitig oder alternierend mit Licht (4) zweier unterschiedlicher Wellenlängen verfolgt werden.

**10.** Eine Vorrichtung (1) zum Verfolgen einer Bewegung eines Partikels (2) in einer Probe, wobei die Vorrichtung (1) aufweist:

- eine Lichtquelle 5, die konfiguriert ist, um Licht zum Treiben des Partikels (2) zum Emittieren von Photonen bereitzustellen, wobei die Lichtquelle (5) Strahlformungsmittel (7) umfasst, die konfiguriert sind, um das Licht (4) mit einer Intensitätsverteilung (18) auf die Probe aufzubringen, die ein räumlich begrenztes Minimum (19) aufweist, und
- einen Detektor (12, 15), der konfiguriert ist, um die Photonen zu detektieren, die von dem Partikel (2) emittiert werden und um ein Signal bereitzustellen, dass die Rate der detektieren Photonen anzeigt,
**gekennzeichnet durch**
- Strahlablenkungsmittel (9 bis 11), die konfiguriert sind, um die Intensitätsverteilung (18) relativ zu der Probe (3) zu bewegen und um basierend auf dem Signal des Detektors (12, 15) derart kontrolliert zu werden, dass eine Rate der von dem Detektor (12, 15) detektierten Photonen zum Verfolgen des sich bewegenden Partikels (2) mit dem Minimum (19) minimal bleibt.

**11.** Die Vorrichtung (1) nach Anspruch 10, wobei die Lichtquelle (5) eine Mehrzahl von kohärenten Lichtstrahlen überlagert, um ein Interferenzmuster auszubilden, das eine Nullstelle an der Position des Minimums (12) aufweist, wobei die Lichtquelle (5) optional einen steuerbaren Spatial-Light-Modulator zum Modulieren einer Phasenrelation der Mehrzahl von Lichtstrahlen aufweist.

**12.** Die Vorrichtung (1) nach einem der Ansprüche 10 und 11, wobei der Detektor ein Punktdetektor (12) ist oder wobei der Detektor (12) eine Kamera (15) ist.

**13.** Die Vorrichtung (1) nach einem der Ansprüche 10 bis 12 und weiterhin eine Kamera (15) aufweisend, die zum Abbilden der Probe (3) konfiguriert ist.

**14.** Die Vorrichtung (1) nach einem der Ansprüche 10 bis 13, wobei die Lichtquelle (5) eine gepulste Lichtquelle ist, die das Licht (4) in Pulsen auf die Probe aufbringt und wobei der Detektor (12) ein mit der gepulsten Lichtquelle synchronisiertes Gatter aufweist, das konfiguriert ist, um die von dem Partikel emittierten Photonen in einem begrenzten Zeitraum nach jedem Puls zu detektieren.

**15.** Die Vorrichtung (1) nach einem der Ansprüche 10 bis 14, wobei zwei Lichtquellen für Licht unterschiedlicher Wellenlängen zum gleichzeitigen oder alternativen Verfolgen von Bewegungen von zwei unterschiedlichen Partikeln vorgesehen sind.

**Revendications**

**1.** Procédé de suivi du déplacement d'une particule (2) dans un échantillon (3), la particule (2) étant amenée à émettre des photons lorsqu'elle est soumise à la lumière (4), le procédé comprenant :

- la formation de la lumière pour fournir une répartition de l'intensité lumineuse (18) comprenant un minimum limité dans l'espace (19),
- l'application de la répartition de l'intensité lumineuse (18) à l'échantillon (3) de telle sorte que la particule (2) se trouve dans le minimum limité dans l'espace (19) de la répartition de l'intensité lumineuse (18), et
- la détection des photons émis par la particule (2),
**caractérisé par**
- le déplacement de la répartition de l'intensité lumineuse (18) par rapport à l'échantillon (3) de telle sorte qu'une vitesse des photons émis par la particule (2) reste minimale, dans lequel la particule (2) est suivie par le minimum (19) de la répartition de l'intensité lumineuse (18).

**2.** Procédé selon la revendication 1, dans lequel le minimum (19) de la répartition de l'intensité lumineuse (18) est limité dans l'espace dans au moins une dimension spatiale, et dans lequel la répartition de l'intensité lumineuse (18) est déplacée par rapport à l'échantillon (3) dans les directions de toutes les dimensions dans lesquelles le minimum (19) est limité dans l'espace.

**3.** Procédé selon la revendication 1 ou 2, dans lequel la lumière est formée pour fournir la répartition de l'intensité lumineuse (18) à l'aide d'un motif d'interférence de faisceaux lumineux cohérents de la lumière et dans lequel le minimum (19) est un point zéro du motif d'interférence, dans lequel, éventuellement, une relation de phase des faisceaux lumineux cohérents est modulée pour limiter dans l'espace le minimum (19) à partir de directions différentes.

**4.** Procédé selon l'une quelconque des revendications 1 à 3, dans lequel les photons sont détectés par un détecteur de points (12).

**5.** Procédé selon l'une quelconque des revendications 1 à 4, dans lequel l'échantillon (3) est imagé avec une caméra (15), dans lequel, éventuellement, une position de départ de la particule (2) est déterminée avec la caméra (15) lorsque l'échantillon (3) est soumis uniformément à la lumière.

**6.** Procédé selon la revendication 5, dans lequel une position de la répartition de l'intensité de lumière (18) par rapport à l'échantillon (3) est suivie par la caméra (15), et/ou dans lequel une direction du déplacement de la particule (2) est déterminée par des positions au niveau desquelles les photons émis par la particule (2) sont détectés avec la caméra (15).

**7.** Procédé selon l'une quelconque des revendications 1 à 6, dans lequel la lumière (4) est appliquée à l'échantillon sous forme d'impulsions et dans lequel les photons émis par la particule (2) sont détectés dans un intervalle de temps limité après chacune des impulsions.

**8.** Procédé selon l'une quelconque des revendications 1 à 7, dans lequel la particule est activée par la lumière (4) d'un premier état dans lequel la particule ne peut pas être amenée à émettre des photons à un second état dans lequel la particule peut être amenée à émettre des photons.

**9.** Procédé selon l'une quelconque des revendications 1 à 8, dans lequel les déplacements de deux particules différentes (2) sont suivis simultanément ou alternativement avec de la lumière (4) de deux longueurs d'onde différentes.

**10.** Appareil (1) pour le suivi d'un déplacement d'une particule (2) dans un échantillon (3), l'appareil (1) comprenant :

- une source de lumière (5) configurée pour fournir de la lumière pour amener la particule (2) à émettre des photons, la source de lumière (5) incluant des moyens de mise en forme de faisceau (7) configurés pour appliquer la lumière (4) à l'échantillon (3) avec une répartition d'intensité (18) comprenant un minimum limité dans l'espace (19), et
- un détecteur (12, 15) configuré pour détecter les photons émis par la particule (2) et pour fournir un signal indiquant une vitesse des photons détectés,
**caractérisé par**
- des moyens de déviation de faisceau (9 à 11) configurés pour déplacer la répartition d'intensité (18) par rapport à l'échantillon et pour être contrôlés sur la base du signal du détecteur (12, 15) de telle sorte qu'une vitesse des photons détectée par le détecteur (12, 15) reste minimale pour suivre la particule en mouvement (2) avec le minimum (19).

**11.** Appareil (1) selon la revendication 10, dans lequel la source de lumière (5) se superpose à une pluralité de faisceaux lumineux cohérents pour former un motif d'interférence comprenant un point zéro à la position du minimum (19), dans lequel, éventuellement, la source de lumière (5) inclut un modulateur de lumière spatiale contrôlable pour moduler une relation de phase de la pluralité de faisceaux lumineux.

**12.** Appareil (1) selon l'une quelconque des revendications 10 et 11, dans lequel le détecteur est un détecteur de points (12), ou dans lequel le détecteur (12) est une caméra (15).

**13.** Appareil (1) selon l'une quelconque des revendications 10 à 12, et comprenant en outre une caméra (15) configurée pour imager l'échantillon (3).

**14.** Appareil (1) selon l'une quelconque des revendications 10 à 13, dans lequel la source de lumière (5) est une source de lumière pulsée qui applique la lumière (4) à l'échantillon sous forme d'impulsions et dans lequel le détecteur (12) comprend une grille synchronisée avec la source de lumière pulsée configurée pour détecter les photons émis par la particule dans un intervalle de temps limité après chacune des impulsions.

**15.** Appareil (1) selon l'une quelconque des revendications 10 à 14, dans lequel deux sources de lumière sont fournies pour une lumière de longueurs d'onde différentes afin de suivre simultanément ou en alternance les déplacements de deux particules différentes.

EP 2 780 694 B1

Fig. 1

Fig. 2

Fig. 3

Fig. 4

Fig. 5

Fig. 6

**EP 2 780 694 B1**

## REFERENCES CITED IN THE DESCRIPTION

**Patent documents cited in the description**

- DE 2546952 A1
- US 3999855 A
- US 20030007894 A1
- US 5793478 A